# EUROPÄISCHE PATENTSCHRIFT

(11) **EP 3 724 941 B1**
(45) Veröffentlichungstag und Bekanntmachung des Hinweises auf die Patenterteilung: **23.07.2025**
(21) Anmeldenummer: 18815606.1
(22) Anmeldetag: 04.12.2018
(51) Int. Cl.: H01M 8/12

(54) **BRENNSTOFFZELLENREGELVERFAHREN**
FUEL CELL CONTROL METHOD
PROCÉDÉ DE RÉGULATION DE PILE À COMBUSTIBLE

(30) Priorität: 13.12.2017 DE 102017222558
(43) Veröffentlichungstag der Anmeldung: 21.10.2020
(73) Patentinhaber: Robert Bosch GmbH, 70442 Stuttgart (DE)
(72) Erfinder: BRANDENBURGER, Ralf, 71729 Erdmannhausen (DE); DOMASCHKE, Norbert, 71229 Leonberg (DE)
(86) Internationale Anmeldenummer: PCT/EP2018/083416
(87) Internationale Veröffentlichungsnummer: WO 2019/115281

(56) Entgegenhaltungen:
- EP-A2- 1 139 473
- DE-A1- 102004 025 229
- DE-C1- 19 620 501

## Beschreibung

### Stand der Technik

Es ist bereits ein Brennstoffzellenregelverfahren zu einer Regelung eines Betriebsparameters, insbesondere Brennstoffnutzung, einer Brennstoffzellenvorrichtung, insbesondere einer Festoxidbrennstoffzellenvorrichtung, vorgeschlagen worden.

Beispielsweise offenbart die EP 1 139 473 A2 ein Brennstoffzellensystem und Verfahren zum Betreiben eines Brennstoffzellensystems. Auch die DE 196 20 501 C1 offenbart ein Verfahren zum Betreiben einer Brennstoffzellenanordnung. Die DE 10 2004 025229 A1 offenbart eine Brennstoffzellenanlage mit einem Kathodenstoffstrom.

### Offenbarung der Erfindung

Die Erfindung geht aus von einem Brennstoffzellenregelverfahren zu einer Regelung eines Betriebsparameters, insbesondere einer Brennstoffnutzung, einer Brennstoffzellenvorrichtung, insbesondere einer Festoxidbrennstoffzellenvorrichtung.

Es wird vorgeschlagen, dass die Brennstoffzellenvorrichtung eine Messeinheit zu einer Erfassung von Zusammensetzungen von aus zumindest zwei parallel geschalteten Brennstoffzelleneinheiten austretenden Fluiden, insbesondere Anodenaustrittsgasen, umfasst.

Darüber hinaus wird vorgeschlagen, dass die Messeinheit für zumindest zwei parallel geschaltete Brennstoffzelleneinheiten der Brennstoffzellenvorrichtung zumindest je eine Lambdasonde, insbesondere je eine Breitbandlambdasonde, umfasst.

Es wird vorgeschlagen, dass in zumindest einem Verfahrensschritt der Betriebsparameter in Abhängigkeit von Zusammensetzungen von aus zumindest zwei parallel geschalteten Brennstoffzelleneinheiten austretenden Fluids, insbesondere Anodenaustrittsgas, geregelt wird.

Unter einer "Brennstoffzellenvorrichtung" soll insbesondere eine Vorrichtung verstanden werden, welche zumindest eine Brennstoffzelle mit einer Kathode und einer Anode umfasst. Vorzugsweise weist die Brennstoffzellenvorrichtung zumindest je eine Fluidzuleitung zur Kathode und zur Anode der Brennstoffzelle auf, sowie zumindest eine Fluidableitung. Bevorzugt ist zumindest eine Fluidzuleitung zu einer Führung eines fluiden Brennstoffs, beispielsweise eines Wasserstoff- und/oder Kohlenwasserstoffgemisches, insbesondere zur Anode, vorgesehen. Vorzugsweise ist zumindest eine, insbesondere weitere, Fluidzuleitung zu einer Führung eines fluiden Oxidans, beispielsweise eines Sauerstoffgemischs, insbesondere zur Kathode, vorgesehen. Vorzugsweise ist die Fluidableitung dazu vorgesehen, ein aus der Anode austretendes Fluid, insbesondere einen zumindest teilweise oxidierten Brennstoff, abzuleiten. Unter einem "Betriebsparameter" soll insbesondere eine Größe verstanden werden, welche einen Betrieb der Brennstoffzellenvorrichtung, insbesondere den Verbrennungsvorgang in der zumindest einen Brennstoffzelle, charakterisiert. Vorzugsweise charakterisiert der Betriebsparameter eine Effizienz des Betriebs, insbesondere einen Ressourcenverbrauch. Besonders bevorzugt ist der Betriebsparameter als Brennstoffnutzung ausgebildet. Unter "Brennstoffnutzung" soll insbesondere ein durch die Brennstoffzelle oxidierter Anteil des Brennstoffs im Verhältnis zu einem oxidierbaren Anteil des Brennstoffs vor dem Durchlaufen der Brennstoffzelle verstanden werden. In einer alternativen Ausgestaltung könnte der Betriebsparameter auch analog als Oxidansnutzung ausgebildet sein. Vorzugsweise kann der Betriebsparameter anhand von Versorgungsparametern, beispielsweise einer, insbesondere pro Zeit, zugeführten Brennstoffmenge und/oder einer zugeführten Oxidansmenge, und/oder Prozessparametern, beispielsweise einer Temperatur und/oder einem Druck innerhalb der Brennstoffzelle, ermittelt werden. Insbesondere wird zur Ermittlung des Betriebsparameters der in der Brennstoffzelle zumindest teilweise oxidierte Brennstoff bei einem Austritt aus der Brennstoffzellenvorrichtung, insbesondere bei einem Austritt aus der Brennstoffzelle, bezüglich seiner chemischen Zusammensetzung untersucht. Insbesondere wird zur Ermittlung des Betriebsparameters ein relativer und/oder absoluter Anteil zumindest eines Stoffes in dem austretenden Fluid erfasst. Vorzugsweise wird der Betriebsparameter in zumindest einem Verfahrensschritt mittels einer Regelung im Wesentlichen stets konstant gehalten. Unter "im Wesentlichen stets konstant" soll insbesondere verstanden werden, dass der Betriebsparameter zumindest während 90 % einer Dauer des Verfahrensschritts um weniger als 5 %, bevorzugt weniger als 1 %, von einem Sollwert abweicht. In einer alternativen Ausgestaltung ist auch eine periodische Regelung vorstellbar. Insbesondere wird der Betriebsparameter anhand einer Messung und/oder Anpassung von Versorgungsparametern und/oder Prozessparametern geregelt. Bevorzugt dient die Zusammensetzung des austretenden Fluids als Regelgröße für eine Regelung des Betriebsparameters.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung des Brennstoffzellenregelverfahrens kann vorteilhaft erreicht werden, dass ein Betriebsparameter, insbesondere die Brennstoffnutzung, trotz schwankender Versorgungsparameter, insbesondere Schwankungen der Brennstoffzusammensetzung, auf einem konstruktionsbedingtem zulässigem Extremwert gehalten wird. Insbesondere kann eine Brennstoffzellenvorrichtung trotz schwankender Versorgungsparameter bei maximaler Effizienz sicher betrieben werden.

Ferner wird vorgeschlagen, dass in zumindest einem Verfahrensschritt das austretende Fluid bezüglich eines relativen Oxidansgehalts, insbesondere Sauerstoffgehalts, ausgewertet wird. Insbesondere kann unter einem "Oxidansgehalt" eine Konzentration eins Oxidans und/oder eine Konzentration eines sich mit einem Oxidans verbindenden Stoffs, insbesondere noch nicht umgesetzten Brennstoffs, verstanden werden. Vorzugsweise beschreibt ein relativer Oxidansgehalt einen Oxidansmangel und/oder einen Oxidansüberschuß des austretenden Fluids gegenüber einem stöchiometrischen Mischungsverhältnisses von Brennstoff und Oxidans. Insbesondere wird der Oxidansgehaltdes austretenden Fluids mit einer Referenzprobe verglichen. Vorzugsweise ist die Referenzprobe ein Fluid mit einem bekannten Oxidansgehalt. Vorzugsweise wird aus einem Unterschied des Oxidansgehalts ein Oxidationsverhältnis des austretenden Fluids, insbesondere ein Verbrennungsluftverhältnis, bestimmt. Insbesondere beschreibt das Oxidationsverhältnis ein Verhältnis eines oxidierten Anteils des austretenden Fluids zu dem oxidierten und noch oxidierbaren Anteil. Insbesondere kann sich der oxidierte Anteil des austretenden Fluids aus einem durch die Brennstoffzelle oxidierten und bereits zuvor oxidierten Anteil zusammensetzen. Vorzugsweise wird, insbesondere unter Berücksichtigung weitere Versorgungsparameter und/oder Prozessparameter, anhand des Oxidationsverhältnisses der Betriebsparameter ermittelt. Durch die erfindungsgemäße Ausgestaltung des Brennstoffzellenregelverfahrens kann vorteilhaft einfach der Betriebsparameter ermittelt werden. Vorteilhaft kann der Betriebsparameter bereits durch eine teilweise Erfassung der Zusammensetzung des austretenden Fluids ermittelt werden.

Weiter wird vorgeschlagen, dass in zumindest einem Verfahrensschritt zu einer Regelung des Betriebsparameters die zugeführte Menge eines Oxidansträgers, insbesondere Wasser, erfasst wird. Unter einem "Oxidansträger" soll insbesondere eine chemische Verbindung verstanden werden, von welcher ein Oxidans abspaltbar ist. Vorzugsweise wird eine dem Brennstoff vor der Brennstoffzelle zugeführte Menge eines Oxidansträgers und/oder Oxidans erfasst, insbesondere gemessen. Bevorzugt wird die zugeführte Menge eines Oxidansträgers und/oder eines Oxidans vor einer Zuführung zum Brennstoff erfasst. Bevorzugt wird ein Brennstoff vor einem Erreichen der Brennstoffzelle mit Wasser angereichert. Alternativ wird der Brennstoff vor einem Erreichen der Brennstoffzelle mit Sauerstoff angereichert. Bevorzugt wird aus der zugeführten Menge des Oxidansträgers und/oder des Oxidans der Anteil eines Oxidans im Brennstoff, in freier oder gebundener Form, vor der Brennstoffzelle ermittelt werden. Durch die erfindungsgemäße Ausgestaltung des Brennstoffzellenregelverfahrens kann vorteilhaft der Betriebsparameter, insbesondere aus dem Oxidationsverhältnis, auch bei einer Beimischung eines Oxidansträgers und/oder eines Oxidans zu dem Brennstoff vor der Brennstoffzelle ermittelt werden. Vorteilhaft kann ein Oxidans und/oder Oxidansträger von einer externen Quelle und/oder einem Speicher zu einem Reformieren des Brenngases vor der Brennstoffzelle zugeführt werden.

Darüber hinaus wird vorgeschlagen, dass in zumindest einem Verfahrensschritt für ein Einstellen zumindest eines Versorgungsparameters der Brennstoffzellenvorrichtung, insbesondere eine Brennstoffmenge und/oder eine Sauerstoffmenge, die Zusammensetzung des aus der Brennstoffzellenvorrichtung austretenden Fluids, insbesondere Anodenaustrittsgas, herangezogen wird. Insbesondere soll unter einem "Versorgungsparameter" eine Größe verstanden werden, die eine Menge einer der Brennstoffzelle für einen Verbrennungsprozess zur Verfügung stehende Ressource beschreibt. Insbesondere kann die Ressource stofflich, beispielsweise die Brennstoffmenge, oder energetisch, beispielsweise eine Wärmemenge, ausgebildet sein. Eine Menge kann beispielsweise als Masse, Volumen und/oder Anzahl erfasst werden. Insbesondere kann ein Versorgungsparameter auch als eine Menge pro Zeit ausgebildet sein, beispielsweise als Stoffstrom. Vorzugsweise ist die Brennstoffzellenvorrichtung dazu vorgesehen, die Ressource der Brennstoffzelle, insbesondere der Anode, insbesondere von einer externen Quelle und/oder einem Speicher, zuzuführen. Bevorzugt wird aus der Zusammensetzung des aus der Brennstoffzellenvorrichtung, insbesondere aus der Anode, austretenden Fluids eine Anpassung eines Versorgungsparameters zu einer Regelung des Betriebsparameters ermittelt. Insbesondere wird aus der Zusammensetzung des aus der Brennstoffzellenvorrichtung austretenden Fluids zu einem Erreichen eines festgelegten Werts des Betriebsparameters ermittelt, ob, insbesondere in der Anode, ein Brennstoffmangel oder ein Oxidansmangel vorliegt. Vorzugsweise wird abhängig von der Zusammensetzung des aus der Brennstoffzellenvorrichtung austretenden Fluids eine Brennstoffmenge mittels einer Fluidsteuereinheit, insbesondere ein Ventil, ein Verdichter und/oder eine Pumpe, vor der Brennstoffzelle eingestellt. Bevorzugt wird eine als ein, insbesondere durch ein Elektrolyt zwischen der Anode und Kathode hindurch diffundierender, Ionenstrom ausgebildete Oxidansmenge abhängig von der Zusammensetzung des aus der Brennstoffzellenvorrichtung austretenden Fluids geregelt. Insbesondere wird die Oxidansmenge über eine Begrenzung des zwischen der Kathode und der Anode fließenden elektrischen Stroms eingestellt. Vorzugsweise wird durch ein Einstellen zumindest eines Versorgungsparameters ein Verhältnis zu einem weiteren Versorgungsparameter geändert. Insbesondere wird abhängig von der Zusammensetzung des aus der Brennstoffzellenvorrichtung austretenden Fluids ein Verhältnis der Brennstoffmenge und des zwischen der Kathode und der Anode fließenden elektrischen Stroms eingestellt. In einer weiteren Ausgestaltung ist es auch denkbar, dass die Versorgungsparameter erfasst werden. Insbesondere kann eine Einstellung eines Versorgungsparameters zu einer Regelung des Betriebsparameters, seinerseits über eine Erfassung des Versorgungsparameters geregelt werden. Durch die erfindungsgemäße Ausgestaltung des Brennstoffzellenregelverfahrens kann vorteilhaft eine Schwankung eines Versorgungsparameters, insbesondere eine Schwankung einer Zusammensetzung eines Brennstoffs, ausgeglichen werden.

Weiterhin wird vorgeschlagen, dass in zumindest einem Verfahrensschritt eine Sicherheitsfunktion in Abhängigkeit von einer Zusammensetzung des aus der Brennstoffzellenvorrichtung austretenden Fluids ein Betriebsmodus der Brennstoffzellenvorrichtung ändert. Insbesondere ist die Sicherheitsfunktion dazu vorgesehen, in die Regelung des Betriebsparameters einzugreifen, insbesondere die Regelung und/oder den Betrieb der Brennstoffzellenvorrichtung zu stoppen. Vorzugsweise erkennt die Sicherheitsfunktion anhand zumindest eines Abbruchkriteriums, ob die Brennstoffzellenvorrichtung in einem vorgesehen Arbeitsbereich operiert. Insbesondere ist zumindest ein Abbruchkriterium abhängig von einer Zusammensetzung des aus der Brennstoffzellenvorrichtung austretenden Fluids. Beispielsweise ist ein Überschreiten oder ein Unterschreiten eines zulässigen Extremwerts des Betriebsparameters ein Abbruchkriterium. Beispielsweise könnte ein Abbruchkriterium das Überschreiten einer maximalen Toleranzzeit sein, innerhalb welcher der Betriebsparameter eine Abweichung von einem Sollwert aufweisen darf. Beispielsweise ist ein Erreichen eines Grenzwerts eines Versorgungsparameters ein Abbruchkriterium. Bevorzugt unterscheidet die Sicherheitsfunktion zwischen harten Abbruchkriterien, bei denen ein Betrieb sofort eingestellt wird, und weichen Abbruchkriterien, bei denen ein Betrieb reduziert wird und/oder zumindest ein weiteres Abbruchkriterium erfüllt sein muss, bevor die Sicherheitsfunktion in den Betrieb eingreift. Vorzugsweise gibt die Sicherheitsfunktion bei einem Erreichen eines Abbruchkriteriums einen Warnhinweis aus. Vorzugsweise greift die Sicherheitsfunktion über zusätzliche Sicherheitseinheiten, beispielsweise Sicherheitsventile, in den Betrieb der Brennstoffzellenvorrichtung ein. Alternativ übernimmt die Sicherheitsfunktion die Steuerung der Versorgungsparameter. Durch die erfindungsgemäße Ausgestaltung des Brennstoffzellenregelverfahrens kann vorteilhaft auf eine Undichtigkeit innerhalb der Brennstoffzellenvorrichtung geschlossen werden. Vorteilhaft kann eine Beschädigung der Brennstoffzellenvorrichtung vermieden werden.

Ferner geht die Erfindung aus von einer Brennstoffzellenvorrichtung, insbesondere Festoxidbrennstoffzellenvorrichtung, mit zumindest einer Regelvorrichtung zur Regelung eines Betriebsparameters, insbesondere Brennstoffnutzung, insbesondere mittels eines erfindungsgemäßen Brennstoffzellenregelverfahrens. Es wird vorgeschlagen, dass die Brennstoffzellenvorrichtung eine Messeinheit zu einer Erfassung einer Zusammensetzung eines aus der Brennstoffzellenvorrichtung austretenden Fluids, insbesondere Anodenaustrittsgas aufweist. Bevorzugt umfasst die Brennstoffzellenvorrichtung zumindest eine Brennstoffzelle. Besonders bevorzugt umfasst die Brennstoffzellenvorrichtung zumindest eine Brennstoffzelleneinheit. Insbesondere umfasst eine Brennstoffzelleneinheit zumindest eine, bevorzugt mehrere, Brennstoffzellen mit gemeinsamen Eintritts- und Austrittsöffnungen. Vorzugsweise umfasst die Regelvorrichtung zumindest eine Recheneinheit. Unter einer "Recheneinheit" soll insbesondere eine Einheit mit einem Informationseingang, einer Informationsverarbeitung und einer Informationsausgabe verstanden werden. Bevorzugt weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Bevorzugt ist die Recheneinheit dazu vorgesehen, von der Messeinheit stammende Daten zu verarbeiten, insbesondere einen Betriebsparameter zu bestimmen. Vorzugsweise umfasst die Regelvorrichtung zumindest eine an der den Brennstoff transportierenden Fluidzuleitungen angeordnete Fluidsteuereinheit, insbesondere eine Pumpe, ein Verdichter und/oder ein Ventil, zu einer Steuerung der Brennstoffmenge. Vorzugsweise umfasst die Regelvorrichtung eine Stromregeleinheit zu einer Regelung des zwischen der Anode und Kathode fließenden elektrischen Stroms. Vorzugsweise umfasst die Regelvorrichtung zumindest eine weitere Messeinheit zu einem Erfassen eines Versorgungsparameters. Durch die erfindungsgemäße Ausgestaltung der Brennstoffzellenvorrichtung kann vorteilhaft erreicht werden, dass ein Betriebsparameter, insbesondere die Brennstoffnutzung, trotz schwankender Versorgungsparameter, insbesondere Schwankungen der Brennstoffzusammensetzung, auf einem konstruktionsbedingten zulässigen Extremwert gehalten wird. Insbesondere kann eine Brennstoffzellenvorrichtung trotz schwankender Versorgungsparameter bei maximaler Effizienz sicher betrieben werden.

Darüber hinaus wird vorgeschlagen, dass die Messeinheit für zumindest zwei parallel geschaltete Brennstoffzelleneinheiten der Brennstoffzellenvorrichtung zumindest je eine Lambdasonde, insbesondere je eine Breitbandlambdasonde, umfasst. Insbesondere ist die Lambdasonde dazu vorgesehen einen Sauerstoffgehalt des aus der Brennstoffzellenvorrichtung austretenden Fluids zu erfassen. Bevorzugt ermittelt die Lambdasonde das Oxidationsverhältnis des aus der Brennstoffzellenvorrichtung austretenden Fluids, insbesondere des am Anodenaustritt der Brennstoffeinheit austretenden Fluids. In einer alternativen Ausgestaltung könnte die Messeinheit zu einer Erfassung der Zusammensetzung des aus der Brennstoffzellenvorrichtung austretenden Fluids auch ein Massenspektrometer, ein Infrarotspektrometer und/oder eine andere dem Fachmann als sinnvoll erscheinende Analyseeinheit aufweisen. Durch die erfindungsgemäße Ausgestaltung der Brennstoffzellenvorrichtung kann vorteilhaft einfach und kostengünstig ein Sauerstoffgehalt des aus der Brennstoffzellenvorrichtung austretenden Fluids zu einer Bestimmung und/oder Regelung des Betriebsparameters erfasst werden.

Unter "parallel geschaltet" soll insbesondere verstanden werden, dass die den Brennstoff transportierende Fluidzuleitung eine Leitungsverzweigung aufweist, wobei an zumindest zwei Ästen der Leitungsverzweigung je eine Brennstoffzelleneinheit angeordnet ist. Die das Oxidans transportierende Fluidzuleitung kann die Brennstoffzelleneinheit parallel, seriell oder für jede Brennstoffzelleneinheit eigenständig versorgen. Insbesondere sind die Lambdasonden dazu vorgesehen, eine Bestimmung eines brennstoffzelleneinheitsspezifischen Betriebsparameters zu ermöglichen. Vorzugsweise wird ein brennstoffzelleneinheitsspezifischen Betriebsparameter über eine brennstoffzelleneinheitsspezifische Stromregeleinheit geregelt. Alternativ weist jeder Ast der Leitungsverzweigung eine Fluidsteuereinheit zu einer brennstoffzelleneinheitsspezifischen Steuerung der Brennstoffmenge auf. Es ist auch denkbar, dass nach zumindest zwei seriell geschalteten Brennstoffzelleneinheiten je eine Lambdasonde zu einer Ermittlung eins brennstoffzelleneinheitsspezifischen Betriebsparameters angeordnet ist. Durch die erfindungsgemäße Ausgestaltung der Brennstoffzellenvorrichtung, können vorteilhaft Ungleichheiten bei einer Brennstoffversorgung über die Zusammensetzung des jeweils an der entsprechenden Brennstoffzelleneinheit austretenden Fluids detektiert und mittels der Regelvorrichtung ausgeglichen werden.

Weiterhin wird vorgeschlagen, dass die Messeinheit in Flussrichtung des austretenden Fluids unmittelbar nach einer Anode einer Brennstoffzelleneinheit der Brennstoffzellenvorrichtung angeordnet ist. Darunter dass eine Einheit "unmittelbar nach" einem Objekt angeordnet ist, soll in diesem Zusammenhang insbesondere verstanden, dass zwischen der Einheit und dem Objekt nur Fluidleitungen angeordnet sind. Insbesondere wird eine Zusammensetzung des aus der Brennstoffzellenvorrichtung austretenden Fluids zwischen der Einheit und dem Objekt beibehalten. Durch die erfindungsgemäße Ausgestaltung der Brennstoffzellenvorrichtung kann vorteilhaft das Oxidationsverhältnis des aus der Brennstoffzellenvorrichtung austretenden Fluids zu einer Bestimmung des Betriebsparameters besonders zuverlässig ermittelt werden.

Ferner wird vorgeschlagen, dass die Messeinheit zumindest eine, insbesondere zusätzliche, Lambdasonde, insbesondere eine Breitbandlambdasonde, zu einer Erfassung eines Rezirkulationsstroms umfasst. Insbesondere weist die Messeinheit zumindest zwei Lambdasonden auf. Bevorzugt ist eine Lambdasonde in einer Flussrichtung des aus der Brennstoffzellenvorrichtung austretenden Fluids vor einer Leitungsverzweigung zu einer Rezirkulation angeordnet. Unter einer "Rezirkulation" soll insbesondere eine Zusammenführung zumindest eines Teils des aus einer Brennstoffzelleneinheit austretenden Fluids mit dem zur Brennstoffzelle hinströmenden Brennstoff an einer Stelle vor der Brennstoffzelle verstanden werden. Vorzugsweise weist die Leitungsverzweigung eine Einstelleinheit, insbesondere ein Dreiwegeventil, zu einer Einstellung des Verzweigungsverhältnisses des aus der Brennstoffzelleneinheit austretenden Fluids an der Leitungsverzweigung auf. Insbesondere bezeichnet der "Rezirkulationsstrom" den pro Zeit zurückgeführten Anteil des an der Brennstoffzelleneinheit ausgetretenen Fluids. Vorzugsweise ist eine Lambdasonde nach der Leitungsverzweigung zu einer Rezirkulation eines Teils des Fluids an einem Ast der Leitungsverzweigung angeordnet, welcher dazu vorgesehen ist das Fluid aus der Brennstoffzellenvorrichtung abzuführen. Insbesondere wertet die Regelvorrichtung ein Messwert der nach der Leitungsverzweigung angeordneten Lambdasonde zu einer Regelung des Betriebsparameters aus. Vorzugsweise ermittelt die Regelvorrichtung aus einem Vergleich der mit den beiden Lambdasonden ermittelten Oxidationsverhältnisse den Rezirkulationsstrom. Durch die erfindungsgemäße Ausgestaltung der Brennstoffzellenvorrichtung kann vorteilhaft ein Rezirkulationsstrom erfasst werden. Insbesondere kann vorteilhaft ein Betriebsparameter unter Berücksichtigung des Rezirkulationsstroms angepasst werden.

Das erfindungsgemäße Brennstoffzellenregelverfahren und/oder die erfindungsgemäße Brennstoffzellenvorrichtung sollen/soll hierbei nicht auf die oben beschriebene Anwendung und Ausführungsform beschränkt sein. Insbesondere kann das erfindungsgemäße Brennstoffzellenregelverfahren und/oder die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In der Zeichnung sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Brennstoffzellenvorrichtung,
- Fig. 2: ein Flussdiagramm eines erfindungsgemäßen Brennstoffzellenregelverfahrens für die erfindungsgemäße Brennstoffzellenvorrichtung,
- Fig. 3: eine schematische Darstellung einer Brennstoffzellenvorrichtung mit einer Rezirkulation eines Anodenaustrittsgases und
- Fig. 4: eine schematische Darstellung einer erfindungsgemäßen Brennstoffzellenvorrichtung mit parallel geschalteten Brennstoffzelleneinheiten.

### Beschreibung der Ausführungsbeispiele

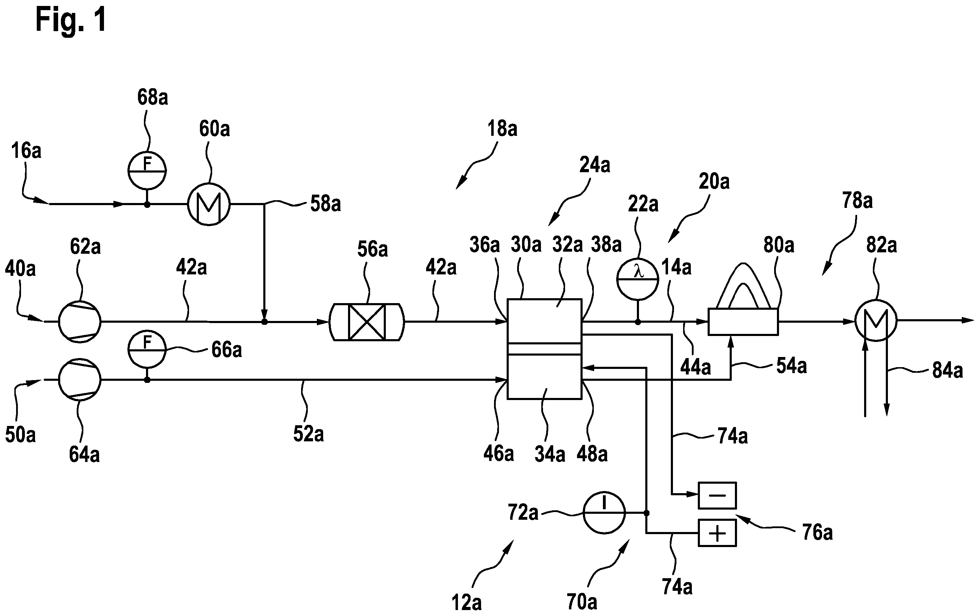

Figur 1 zeigt eine Brennstoffzellenvorrichtung 12a mit zumindest einer Regelvorrichtung 18a zur Regelung eines Betriebsparameters, insbesondere einer Brennstoffnutzung. Die Brennstoffzellenvorrichtung 12a ist bevorzugt als Festoxidbrennstoffzellenvorrichtung ausgebildet. Es ist jedoch auch denkbar, dass die Brennstoffzellenvorrichtung 12a eine andere, einem Fachmann als sinnvoll erscheinende Ausgestaltung aufweist. Vorzugsweise umfasst die Brennstoffzellenvorrichtung 12a eine Brennstoffzelleneinheit 24a. Bevorzugt umfasst die Brennstoffzelleneinheit 24a zumindest eine Brennstoffzelle 30a mit einer Anode 32a und einer Kathode 34a. Bevorzugt umfasst die Brennstoffzelleneinheit 24a eine Anodeneintrittsöffnung 36a und eine Anodenaustrittsöffnung 38a für ein Fluid, insbesondere einen Brennstoff 40a. Vorzugsweise ist an der Anodeneintrittsöffnung 36a eine Fluidzuleitung 42a zu einem Transport des Brennstoffs 40a in die Anode 32a angeordnet. Vorzugsweise ist an der Anodenaustrittsöffnung 38a eine Fluidableitung 44a zu einem Transport des in der Anode 32a produzierten Fluids 14a, insbesondere des zumindest teilweise oxidierten Brennstoffs 40a, aus der Anode 32a angeordnet. Vorzugsweise umfasst die Brennstoffzelleneinheit 24a eine Kathodeneintrittsöffnung 46a und eine Kathodenaustrittsöffnung 48a für ein Fluid, insbesondere ein Oxidans 50a. Vorzugsweise ist an der Kathodeneintrittsöffnung 46a eine Fluidzuleitung 52a zu einem Transport des Oxidans 50a in die Kathode 34a angeordnet. Vorzugsweise ist an der Kathodenaustrittsöffnung 48a eine Fluidableitung 54a zu einem Transport des ungenutzten Oxidans 50a aus der Kathode 34a angeordnet. Bevorzugt umfasst die Brennstoffzellenvorrichtung 12a eine Umwandlungseinheit 56a, insbesondere einen Reformer, zu einer chemischen Umwandlung eines zugeführten Brennstoffs 40a. Bevorzugt ist die Umwandlungseinheit 56a an der Fluidzuleitung 42a zur Anode 32a angeordnet. Vorzugsweise wird ein Brennstoff 40a vor einer Umwandlung mittels der Umwandlungseinheit 56a mit einem Oxidans und/oder einem Oxidansträger 16a angereichert. Insbesondere weist die Brennstoffzelleneinheit 24a eine Oxidansträgerzuleitung 58a auf. Bevorzugt wird ein Brennstoff 40a mit Wasser angereichert. Bevorzugt weist die Oxidansträgerzuleitung 58a einen Verdampfer 60a zu einer Erzeugung von Wasserdampf auf.

Die Brennstoffzellenvorrichtung 12a umfasst eine Messeinheit 20a zu einer Erfassung einer Zusammensetzung eines aus der Brennstoffzellenvorrichtung 12a austretenden Fluids 14a, insbesondere Anodenaustrittsgas. Die Messeinheit 20a umfasst zumindest eine Lambdasonde 22a, insbesondere eine Breitbandlambdasonde. Die Messeinheit 20a ist in Flussrichtung des austretenden Fluids 14a unmittelbar nach einer Anode 32a einer Brennstoffzelleneinheit 24a der Brennstoffzellenvorrichtung 12a angeordnet. Die Lambdasonde 22a weist vorzugsweise eine intern versiegelte Referenzprobe auf. Es ist aber auch denkbar, dass die Lambdasonde 22a einen Sauerstoffgehalt des aus der Anodenaustrittsöffnung 38a austretenden Fluids 14a mit dem Sauerstoffgehalt des in der kathodenseitigen Fluidzuleitung 52a und/oder Fluidableitung 54a befindlichen Fluids vergleicht. Alternativ wird ein über eine eigene Zuleitung zur Lambdasonde 22a zugeführtes Fluid, insbesondere Umgebungsluft, als Referenzprobe verwendet.

Vorzugsweise umfasst die Regelvorrichtung 18a eine an der anodenseitigen Fluidzuleitung 42a angeordnete Fluidsteuereinheit 62a, insbesondere eine Pumpe, ein Verdichter und/oder ein Ventil, zu einer Einstellung und/oder Beförderung einer Brennstoffmenge. Vorzugsweise umfasst die Regelvorrichtung 18a eine an der kathodenseitigen Fluidzuleitung 52a angeordnete Fluidsteuereinheit 64a, insbesondere eine Pumpe, ein Verdichter und/oder ein Ventil, zu einer Einstellung und/oder Beförderung einer Oxidansmenge. Bevorzugt umfasst die Regelvorrichtung 18a nach der kathodenseitigen Fluidsteuereinheit 64a eine Messeinheit 66a zu einem Erfassen der in die Kathode 34a strömenden Oxidansmenge. Vorzugsweise umfasst die Regelvorrichtung 18a eine an der Oxidansträgerzuleitung 58a angeordnete Messeinheit 68a zu einem Erfassen der Oxidansträgermenge. Bevorzugt umfasst die Regelvorrichtung 18a eine Stromregeleinheit 70a zu einem Einstellen und/oder Regeln des zwischen der Kathode 34a und Anode 32a fließenden elektrischen Stroms 74a. Insbesondere umfasst die Stromregeleinheit 70a eine Messeinheit 72a zu einem Erfassen des zwischen der Kathode 34a und Anode 32a fließenden elektrischen Stroms 74a. Vorzugsweise umfasst die Regelvorrichtung 18a eine Recheneinheit, insbesondere eine zentrale Recheneinheit, zu einem Verarbeiten von den Messeinheiten 20a, 66a, 68a, 72a erfasster Daten.

Bevorzugt weist die Brennstoffzellenvorrichtung 12a zumindest eine Anschlusseinheit 76a zu einem Abgreifen des von der Brennstoffzelleneinheit 24a produzierten elektrischen Stroms 74a auf. Optional weist die Brennstoffzellenvorrichtung 12a eine Verwertungseinheit 78a auf. Vorzugsweise ist die Verwertungseinheit 78a dazu vorgesehen Reste an oxidierbarem Brennstoff 40a in dem aus der Brennstoffzellenvorrichtung 12a austretenden Fluid 14a zu verwerten, insbesondere zu oxidieren. Insbesondere weist die Verwertungseinheit 78a eine Brennereinheit 80a auf, die von der kathodenseitigen Fluidableitung 54a und anodenseitigen Fluidableitung 44a gespeist wird. Vorzugsweise weist die Verwertungseinheit 78a einen Wärmetauscher 82a auf. Bevorzugt ist der Wärmetauscher 82a dazu vorgesehen, eine durch die Brennereinheit 80a erzeugte Wärme auf einen Wärmekreislauf 84a zu übertragen. Vorzugsweise wird der Wärmekreislauf 84a dazu genutzt eine Temperatur der sich in den Fluidzuleitungen 42a, 52a befindlichen Fluide zu erhöhen. Alternativ oder zusätzlich kann der Wärmekreislauf 84a eine Kreislaufanschlusseinheit aufweisen, zu einem Abführen der Wärme aus der Brennstoffzellenvorrichtung 12a, insbesondere zu einer externen Weiterverwendung.

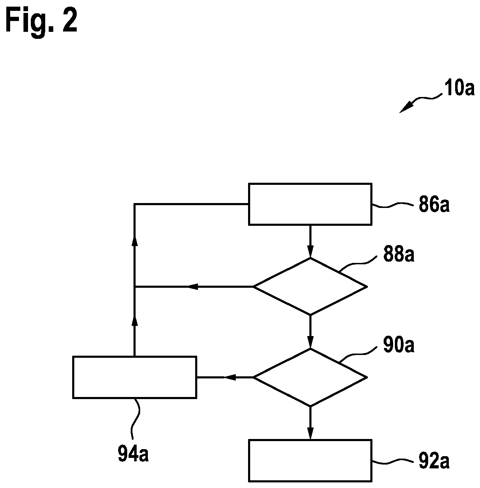

Figur 2 zeigt ein Flussdiagramm eines Brennstoffzellenregelverfahrens 10a zu einer Regelung eines Betriebsparameters, insbesondere einer Brennstoffnutzung, der Brennstoffzellenvorrichtung 12a. In zumindest einem Verfahrensschritt wird der Betriebsparameter in Abhängigkeit von einer Zusammensetzung eines aus der Brennstoffzellenvorrichtung 12a austretenden Fluids 14a, insbesondere eines Anodenaustrittsgases, geregelt. Vorzugsweise findet in zumindest einem Verfahrensschritt eine Messdatenerhebung und Verarbeitung 86a statt. In zumindest einem Verfahrensschritt wird das austretende Fluid 14a bezüglich eines relativen Oxidansgehalts, insbesondere Sauerstoffgehalts, ausgewertet. Insbesondere wird ein Oxidationsverhältnis des aus der Brennstoffzellenvorrichtung 12a austretenden Fluids 14a erfasst. In zumindest einem Verfahrensschritt wird zu einer Regelung des Betriebsparameters die zugeführte Menge eines Oxidansträgers 16a, insbesondere Wasser, erfasst. Bevorzugt wird die dem Brennstoff 40a zugeführte Oxidansträgermenge erfasst. Vorzugsweise wird ein zwischen der Kathode 34a und der Anode 32a fließender elektrischer Strom 74a erfasst. Bevorzugt wird, insbesondere mittels der Recheneinheit, zumindest aus dem Oxidationsverhältnis auf den, insbesondere als Brennstoffnutzung, ausgebildeten Betriebsparameter geschlossen. Insbesondere wird der Betriebsparameter unter Berücksichtigung der Oxidansträgermenge und des elektrischen Stroms 74a ermittelt.

Vorzugsweise wird in einem weiteren Verarbeitungsschritt 88a eine Abweichung des Betriebsparameters von einem Sollwert erfasst. Bevorzugt wird bei einer festgestellten Abweichung des Betriebsparameters von einem Sollwert in einem weiteren Verfahrensschritt eine Sicherheitsfunktion ausgeführt. Vorzugsweise überprüft die Sicherheitsfunktion in dem Verfahrensschritt Abbruchkriterien. In zumindest einem Verfahrensschritt ändert die Sicherheitsfunktion in Abhängigkeit von einer Zusammensetzung des aus der Brennstoffzellenvorrichtung 12a austretenden Fluids 14a ein Betriebsmodus der Brennstoffzellenvorrichtung 12a. Insbesondere findet bei einer Erfüllung eines Abbruchkriteriums eine Abschaltung 92a der Brennstoffzellenvorrichtung 12a, insbesondere einer einzelnen Brennstoffzelleneinheit 24a, statt. Vorzugsweise überprüft die Sicherheitsfunktion zumindest ob der Betriebsparameter einen maximal zulässigen Wert überschreitet und/oder ob eine Stellgröße zur Regelung des Betriebsparameters eine Grenze eines vorgesehenen Wertebereichs erreicht hat. Vorzugsweise schließt sich an eine Überprüfung 90a durch die Sicherheitsfunktion ein weiterer Verfahrensschritt an, in welchem eine Anpassung 94a der Versorgungsparameter , insbesondere in einer Funktion als Stellgrößen, durchgeführt wird. In zumindest einem Verfahrensschritt wird für ein Einstellen zumindest eines Versorgungsparameters der Brennstoffzellenvorrichtung 12a, insbesondere eine Brennstoffmenge und/oder eine Sauerstoffmenge, die Zusammensetzung des aus der Brennstoffzellenvorrichtung 12a austretenden Fluids 14a, insbesondere Anodenaustrittsgas, herangezogen. Insbesondere wird für das Einstellen der Versorgungsparameter die Abweichung des Betriebsparameters von einem Sollwert herangezogen. Insbesondere ist ein Einstellen der Versorgungsparameter dazu vorgesehen, den Betriebsparameter zu regeln, insbesondere konstant zu halten. Vorzugsweise wird nach einer Änderung zumindest eines Versorgungsparameters erneut der Betriebsparameter bestimmt.

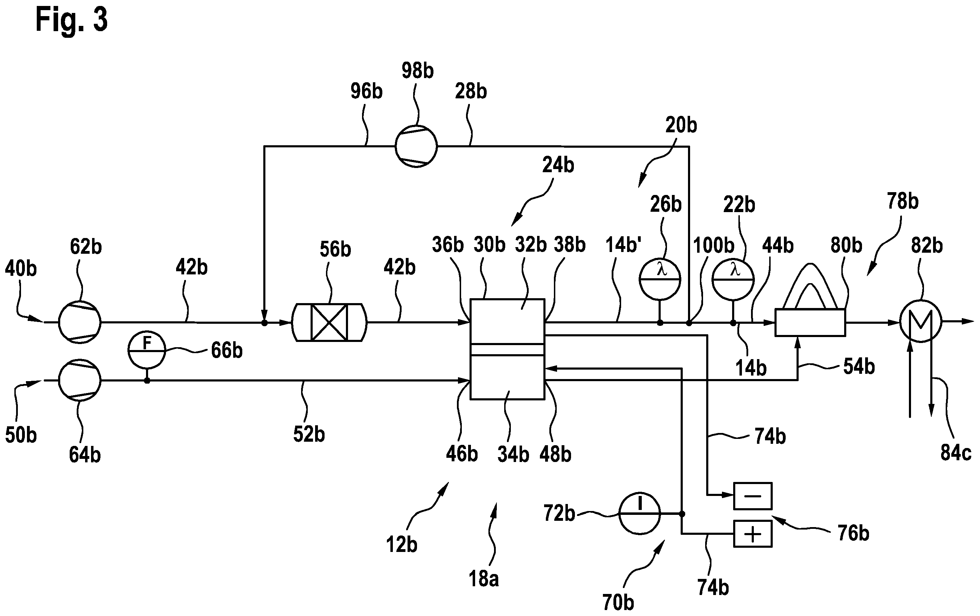

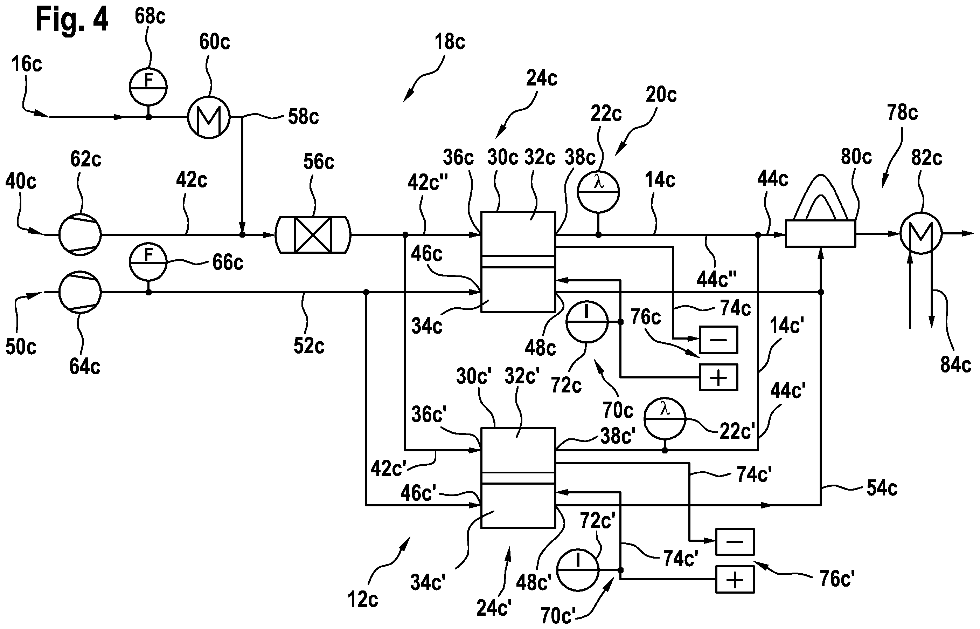

In den Figuren 3 und 4 sind weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 4 ist der Buchstabe a durch die Buchstaben b und c ersetzt.

Figur 3 zeigt eine Brennstoffzellenvorrichtung 12b, insbesondere eine Festoxidbrennstoffzellenvorrichtung, mit zumindest einer Regelvorrichtung 18b zur Regelung eines Betriebsparameters, insbesondere einer Brennstoffnutzung. Die Brennstoffzellenvorrichtung 12b umfasst eine Messeinheit 20b zu einer Erfassung einer Zusammensetzung eines aus der Brennstoffzellenvorrichtung 12b austretenden Fluids 14b, insbesondere Anodenaustrittsgas. Vorzugsweise umfasst die Brennstoffzellenvorrichtung 12b eine Rezirkulationsleitung 96b, insbesondere anstelle der Oxidansträgerzuleitung (vgl. Fig.1, 58a). Die Messeinheit 20b umfasst zumindest eine, insbesondere zusätzliche, Lambdasonde 26b, insbesondere eine Breitbandlambdasonde, zu einer Erfassung eines Rezirkulationsstroms 28b. Bevorzugt ist in der Rezirkulationsleitung 96b eine Fluidsteuereinheit 98b, insbesondere ein Ventil, eine Pumpe oder ein Verdichter, zu einem Einstellen des Rezirkulationsstroms 28b angeordnet. Vorzugsweise führt die Rezirkulationsleitung 96b einen Teil des aus der Brennstoffzelleneinheit 24b austretenden Fluids 14b' zurück in die anodenseitige Fluidzuleitung 42b. Insbesondere weist die Fluidableitung 44b eine Verzweigung 100b auf, an welcher die Rezirkulationsleitung 96b abgeschlossen ist. Vorzugsweise wird der zurückgeführte Teil an einer Stelle in Strömungsrichtung des in der Fluidzuleitung 42b befindlichen Brennstoffs 40b vor der Umwandlungseinheit 56b mit dem Brennstoff 40b zusammengeführt. Vorzugsweise ist an einem weiteren Ast der Verzweigung 100b die Lambdasonde 22b angeordnet. Insbesondere wird der Betriebsparameter mittels eines Messwerts der Lambdasonde 22b geregelt, welche in Strömungsrichtung nach der Verzweigung 100b der Fluidableitung 44b angeordnet ist. Bezüglich einer Beschreibung eines Brennstoffzellenregelverfahrens 10b für die Brennstoffzellenregelvorrichtung 12b sei auf die obige Beschreibung zu Figur 2 des analogen Brennstoffzellenregelverfahrens 10a verwiesen. Vorzugsweise entfällt während der Messdatenerhebung und Verarbeitung 86b des Brennstoffzellenregelverfahrens 10b eine Erfassung der zugeführten Menge des Oxidansträgers.

Figur 4 zeigt eine Ausführungsform einer erfindungsgemäßen Brennstoffzellenvorrichtung 12c, insbesondere eine Festoxidbrennstoffzellenvorrichtung, mit zumindest einer Regelvorrichtung 18c zur Regelung eines Betriebsparameters, insbesondere einer Brennstoffnutzung. Die Brennstoffzellenvorrichtung 12c umfasst eine Messeinheit 20c zu einer Erfassung einer Zusammensetzung eines aus der Brennstoffzellenvorrichtung 12c austretenden Fluids 14c, 14c', insbesondere Anodenaustrittsgas. Die Brennstoffzellenvorrichtung 12c umfasst zwei parallel geschaltete Brennstoffzelleneinheiten 24c, 24c'. Vorzugsweise sind die Brennstoffzelleneinheiten 24c, 24c' bezüglich einer Brennstoffversorgung der Anode 32c, 32c' parallel geschaltet. Vorzugsweise sind die Brennstoffzelleneinheiten 24c, 24c' bezüglich einer Oxidansversorgung der Kathoden 34c, 34c' parallel geschaltet. Vorzugsweise werden die Anoden 32c, 32c' von einer gemeinsamen Umwandlungseinheit 56c gespeist. Vorzugsweise werden die aus den Brennstoffzelleneinheiten 24c, 24c' austretenden Fluide 14c, 14c' in einer gemeinsamen Verwertungseinheit 78c zusammengeführt. Es ist auch denkbar, dass in unterschiedlichen Ästen der Fluidleitungen 42c', 42c", 44c', 44c" je eine brennstoffzelleneinheitspezifische Umwandlungseinheit und/oder Verwertungseinheit angeordnet ist. Die Messeinheit 20c umfasst für zumindest zwei parallel geschaltete Brennstoffzelleneinheiten 24c, 24c' der Brennstoffzellenvorrichtung 12c' zumindest je eine Lambdasonde 22c, 22c', insbesondere je eine Breitbandlambdasonde. Insbesondere kann ein brennstoffzelleneinheitspezifischer Betriebsparameter erfasst werden. Bezüglich einer Beschreibung eines Brennstoffzellenregelverfahrens 10c für die Brennstoffzellenregelvorrichtung 12c sei auf die obige Beschreibung zu Figur 2 des analogen Brennstoffzellenregelverfahrens 10a verwiesen.

## Patentansprüche

1. Brennstoffzellenregelverfahren zu einer Regelung eines Betriebsparameters, insbesondere Brennstoffnutzung, einer Brennstoffzellenvorrichtung, insbesondere einer Festoxidbrennstoffzellenvorrichtung, **dadurch gekennzeichnet, dass** die Brennstoffzellenvorrichtung eine Messeinheit (20c) zu einer Erfassung von Zusammensetzungen von aus zumindest zwei parallel geschalteten Brennstoffzelleneinheiten (24c, 24c') austretenden Fluiden (14c, 14c'), insbesondere Anodenaustrittsgasen, umfasst, wobei die Messeinheit (20c) für die zumindest zwei parallel geschalteten Brennstoffzelleneinheiten (24c, 24c') der Brennstoffzellenvorrichtung zumindest je eine Lambdasonde (22c, 22c'), insbesondere je eine Breitbandlambdasonde, umfasst, wobei in zumindest einem Verfahrensschritt der Betriebsparameter in Abhängigkeit von Zusammensetzungen von aus zumindest zwei parallel geschalteten Brennstoffzelleneinheiten (24c, 24c') austretenden Fluiden (14c, 14c'), insbesondere Anodenaustrittsgasen, geregelt wird.

2. Brennstoffzellenregelverfahren nach Anspruch 1 **dadurch gekennzeichnet, dass** in zumindest einem Verfahrensschritt das austretende Fluid (14a; 14b; 14c) bezüglich eines relativen Oxidansgehalts, insbesondere Sauerstoffgehalts, ausgewertet wird.

3. Brennstoffzellenregelverfahren nach Anspruch 1 oder 2, **dadurch gekennzeichnet, dass** in zumindest einem Verfahrensschritt zu einer Regelung des Betriebsparameters die zugeführte Menge eines Oxidansträgers (16a; 16c), insbesondere Wasser, erfasst wird.

4. Brennstoffzellenregelverfahren nach einem der vorhergehenden Ansprüche, **dadurch gekennzeichnet, dass** in zumindest einem Verfahrensschritt für ein Einstellen zumindest eines Versorgungsparameters der Brennstoffzellenvorrichtung, insbesondere eine Brennstoffmenge und/oder eine Sauerstoffmenge, die Zusammensetzung des aus der Brennstoffzellenvorrichtung austretenden Fluids (14a; 14b; 14c), insbesondere Anodenaustrittsgas, herangezogen wird.

5. Brennstoffzellenregelverfahren nach einem der vorhergehenden Ansprüche, **dadurch gekennzeichnet, dass** in zumindest einem Verfahrensschritt eine Sicherheitsfunktion in Abhängigkeit von einer Zusammensetzung des aus der Brennstoffzellenvorrichtung austretenden Fluids (14a; 14b; 14c) ein Betriebsmodus der Brennstoffzellenvorrichtung ändert.

6. Brennstoffzellenvorrichtung, insbesondere Festoxidbrennstoffzellenvorrichtung, mit zumindest einer Regelvorrichtung (18a; 18b; 18c) zur Regelung eines Betriebsparameters, insbesondere Brennstoffnutzung, insbesondere mittels eines Brennstoffzellenregelverfahrens nach einem der Ansprüche 1 bis 5, **gekennzeichnet durch** eine Messeinheit (20c) zu einer Erfassung von Zusammensetzungen von aus zumindest zwei parallel geschalteten Brennstoffzelleneinheiten (24c, 24c') austretenden Fluiden (14c, 14c'), insbesondere Anodenaustrittsgasen, wobei die Messeinheit (20c) für die zumindest zwei parallel geschalteten Brennstoffzelleneinheiten (24c, 24c') der Brennstoffzellenvorrichtung zumindest je eine Lambdasonde (22c, 22c'), insbesondere je eine Breitbandlambdasonde, umfasst.

7. Brennstoffzellenvorrichtung nach Anspruch 6, **dadurch gekennzeichnet, dass** die Messeinheit (20a; 20b; 20c) in Flussrichtung des austretenden Fluids (14a; 14b; 14c) unmittelbar nach einer Anode (32a; 32b; 32c, 32c') einer Brennstoffzelleneinheit (24a; 24b; 24c, 24c') der Brennstoffzellenvorrichtung angeordnet ist.

8. Brennstoffzellenvorrichtung nach einem der Ansprüche 6 oder 7, **dadurch gekennzeichnet, dass** die Messeinheit (20b) zumindest eine, insbesondere zusätzliche, Lambdasonde (26b), insbesondere eine Breitbandlambdasonde, zu einer Erfassung eines Rezirkulationsstroms (28b) umfasst.

## Claims

1. Fuel cell control method for controlling an operating parameter, in particular fuel use, of a fuel cell device, in particular a solid oxide fuel cell device, **characterized in that** the fuel cell device comprises a measuring unit (20c) for detecting compositions of fluids (14c, 14c') exiting at least two fuel cell units (24c, 24c') connected in parallel, in particular anode discharge gases, wherein the measuring unit (20c) comprises in each case at least one lambda probe (22c, 22c'), in particular in each case one broadband lambda probe, for the at least two fuel cell units (24c, 24c') connected in parallel of the fuel cell device, wherein, in at least one method step, the operating parameter is controlled in a manner dependent on compositions of fluids (14c, 14c'), in particular anode discharge gases, exiting at least two fuel cell units (24c, 24c') connected in parallel.

2. Fuel cell control method according to Claim 1, **characterized in that**, in at least one method step, the exiting fluid (14a; 14b; 14c) is evaluated with respect to a relative oxide content, in particular oxygen content.

3. Fuel cell control method according to Claim 1 or 2, **characterized in that**, in at least one method step, the amount of an oxidizing agent carrier (16a; 16c), in particular water, which is fed in is detected in order to control the operating parameter.

4. Fuel cell control method according to one of the preceding claims, **characterized in that**, in at least one method step, the composition of the fluid (14a; 14b; 14c) exiting the fuel cell device, in particular anode discharge gas, is used in order to set at least one supply parameter of the fuel cell device, in particular a fuel quantity and/or an oxygen quantity.

5. Fuel cell control method according to one of the preceding claims, **characterized in that**, in at least one method step, an operating mode of the fuel cell device changes a safety function in a manner dependent on a composition of the fluid (14a; 14b; 14c) exiting the fuel cell device.

6. Fuel cell device, in particular solid oxide fuel cell device, with at least one control device (18a; 18b; 18c) for controlling an operating parameter, in particular fuel use, in particular by means of a fuel cell control method according to one of Claims 1 to 5, **characterized by** a measuring unit (20c) for detecting compositions of fluids (14c, 14c'), in particular anode discharge gases, exiting at least two fuel cell units (24c, 24c') connected in parallel, wherein the measuring unit (20c) comprises at least in each case one lambda probe (22c, 22c'), in particular in each case one broadband lambda probe, for the at least two fuel cell units (24c, 24c') connected in parallel of the fuel cell device.

7. Fuel cell device according to Claim 6, **characterized in that** the measuring unit (20a; 20b; 20c) is arranged immediately downstream of an anode (32a; 32b; 32c, 32c') of a fuel cell unit (24a; 24b; 24c, 24c') of the fuel cell device in the flow direction of the exiting fluid (14a; 14b; 14c).

8. Fuel cell device according to either of Claims 6 or 7, **characterized in that** the measuring unit (20b) comprises at least one, in particular additional, lambda probe (26b), in particular one broadband lambda probe, for detecting a recirculation current (28b).

## Revendications

1. Procédé de régulation de pile à combustible destiné à réguler un paramètre de fonctionnement, en particulier une utilisation du combustible, d'un système de pile à combustible, en particulier d'un système de pile à combustible à oxyde solide, **caractérisé en ce que** le système de pile à combustible comprend une unité de mesure (20c) destinée à détecter des compositions de fluides (14c, 14c') sortant d'au moins deux unités de pile à combustible (24c, 24c') connectées en parallèle, en particulier des gaz de sortie d'anode, l'unité de mesure (20c) comprenant, pour lesdites au moins deux unités de pile à combustible (24c, 24c') connectées en parallèle du système de pile à combustible, au moins une sonde lambda (22c, 22c') chacune, en particulier une sonde lambda à large bande chacune, le paramètre de fonctionnement étant régulé lors d'au moins une étape du procédé en fonction des compositions des fluides (14c, 14c') sortant d'au moins deux unités de pile à combustible (24c, 24c') connectées en parallèle, en particulier des gaz de sortie d'anode.

2. Procédé de régulation de pile à combustible selon la revendication 1, **caractérisé en ce que**, lors d'au moins une étape du procédé, le fluide sortant (14a ; 14b ; 14c) est évalué en ce qui concerne une teneur relative en oxydant, en particulier une teneur en oxygène.

3. Procédé de régulation de pile à combustible selon la revendication 1 ou 2, **caractérisé en ce que**, lors d'au moins une étape du procédé, pour réguler le paramètre de fonctionnement, la quantité fournie d'un porteur d'oxydant (16a ; 16c), en particulier de l'eau, est détectée.

4. Procédé de régulation de pile à combustible selon l'une quelconque des revendications précédentes, **caractérisé en ce que**, lors d'au moins une étape du procédé, la composition du fluide (14a ; 14b ; 14c) sortant du système de pile à combustible, en particulier le gaz de sortie d'anode, est utilisée pour régler au moins un paramètre d'alimentation du système de pile à combustible, en particulier une quantité de combustible et/ou une quantité d'oxygène.

5. Procédé de régulation de pile à combustible selon l'une quelconque des revendications précédentes, **caractérisé en ce que**, lors d'au moins une étape du procédé, une fonction de sécurité modifie un mode de fonctionnement du système de pile à combustible en fonction d'une composition du fluide (14a ; 14b ; 14c) sortant du système de pile à combustible.

6. Système de pile à combustible, en particulier système de pile à combustible à oxyde solide, comprenant au moins un dispositif de régulation (18a ; 18b ; 18c) destiné à réguler un paramètre de fonctionnement, en particulier l'utilisation du combustible, en particulier au moyen d'un procédé de régulation de pile à combustible selon l'une quelconque des revendications 1 à 5, **caractérisé par** une unité de mesure (20c) destinée à détecter des compositions de fluides (14c, 14c') sortant d'au moins deux unités de pile à combustible (24c, 24c') connectées en parallèle, en particulier des gaz de sortie d'anode, l'unité de mesure (20c) comprenant, pour lesdites au moins deux unités de pile à combustible (24c, 24c') connectées en parallèle du système de pile à combustible, au moins une sonde lambda (22c, 22c') chacune, en particulier une sonde lambda à large bande chacune.

7. Système de pile à combustible selon la revendication 6, **caractérisé en ce que** l'unité de mesure (20a ; 20b ; 20c) est agencée dans le sens d'écoulement du fluide sortant (14a ; 14b ; 14c) immédiatement en aval d'une anode (32a ; 32b ; 32c, 32c') d'une unité de pile à combustible (24a ; 24b ; 24c, 24c') du système de pile à combustible.

8. Système de pile à combustible selon l'une quelconque des revendications 6 ou 7, **caractérisé en ce que** l'unité de mesure (20b) comprend au moins une sonde lambda (26b), en particulier supplémentaire, en particulier une sonde lambda à large bande, destinée à détecter un courant de remise en circulation (28b).
